# EUROPÄISCHE PATENTSCHRIFT

(11) **EP 0 555 507 B1**
(45) Veröffentlichungstag und Bekanntmachung des Hinweises auf die Patenterteilung: **11.01.1995**
(21) Anmeldenummer: 92102482.4
(22) Anmeldetag: 14.02.1992
(51) Int. Cl.: G01D 5/249, G01D 5/244

(54) **Wegmesseinrichtung**
Position measuring apparatus
Capteur de position

(43) Veröffentlichungstag der Anmeldung: 18.08.1993
(73) Patentinhaber: Dr. Johannes Heidenhain GmbH, D-83292 Traunreut (DE)
(72) Erfinder: Nelle, Günther, Dr., W-8221 Bergen (DE)

(56) Entgegenhaltungen:
- EP-A- 0 325 149
- EP-A- 0 412 481
- DE-C- 3 412 128
- US-A- 2 866 946
- US-A- 4 920 259

## Beschreibung

Die Erfindung bezieht sich auf eine Wegmeßeinrichtung gemäß dem Oberbegriff des Anspruches 1. Derartige Wegmeßeinrichtungen sind aus einer Vielzahl von Druckschriften bekannt. Sie dienen der Messung von Längen oder Winkeln bei Maschinen und Einrichtungen.

Aus der US-A- 4 920 259 ist eine rotatorische Wegmeßeinrichtung bekannt, bei der auf der Codescheibe konzentrisch zu einer Inkrementalspur beiderseits weitere Teilungsspuren vorgesehen sind.

Die Messungen von relativen Maschinenbewegungen können fehlerhaft sein, wenn die Maschinenführungen ungenau sind. Um Führungsfehler von Maschinen zu erfassen und/oder zu kompensieren, sind eine Reihe von Vorschlägen bekannt geworden. So wird in der US-A- 2 866 946 eine Maschine beschrieben, die zwei parallel zueinander angeordnete lineare Meßumformer aufweist, bei denen durch Differenzbildung der Maschinenführungsfehler kompensiert wird.

In der EP-B1-82 441 werden ein Verfahren und Einrichtungen zur Ermittlung und Korrektur von Führungsfehlern beschrieben. Darin werden beispielsweise durch zusätzliche Meßeinrichtungen, deren Abtasteinrichtungen in Meßrichtung hintereinander angeordnet sind, Abstandsänderungen zwischen Abtasteinrichtung und Maßverkörperung erfaßt und in einem Korrekturrechner mit den Koordinatenwerten verrechnet.

Um Wegmeßeinrichtungen von der Güte der Maschinenführungen der zu messenden Maschinen oder Einrichtungen unabhängig zu machen, sind Kupplungen vorgeschlagen, mit deren Hilfe die Wegmeßeinrichtungen gewissermaßen gelenkig mit der zu vermessenden Maschine oder Einrichtung verbunden sind. Als Beispiele seien dafür die US-PS 3,833,303 und US-PS 3,910,703 genannt.

Derartige Lösungen erfordern eine Eigenführung der relativ zueinander beweglichen Elemente der Wegmeßeinrichtung, das sind die Abtasteinrichtung und die Maßverkörperung.

Bei Längenmeßgeräten muß die Winkellage der Abtasteinrichtung zu der Teilung des Maßstabs über die gesamte Meßlänge in sehr engen Grenzen konstant gehalten werden, um Meßfehler zu vermeiden. Die Winkellage des Abtastgitters zum Maßstab hängt dann, wenn die Abtasteinrichtung auf einer besonderen Fläche, z.B. einer seitlichen Maßstabfläche geführt wird, von der Geradheit dieser Lauffläche ab.

Aufgabe der Erfindung ist es, eine Wegmeßeinrichtung zu schaffen, bei der die Führungsgenauigkeit bzw. die Geradheit nicht unnötig eng toleriert werden muß. Diese Aufgabe wird von einer Wegmeßeinrichtung mit den Merkmalen des Anspruches 1 gelöst, vorteilhafte Ausgestaltungen finden sich in den abhängigen Ansprüchen.

Die Vorteile der erfindungsgemäßen Wegmeßeinrichtung bestehen darin, daß an jeder Maßstabstelle die Winkellage des Abtastgitters relativ zu den Teilungsstrichen des Maßstabs gemessen und bei Abweichungen vom Sollwinkel eine entsprechende Korrektur des ermittelten Meßwertes vorgenommen werden kann.

Mit Hilfe der Zeichnungen soll anhand einiger Ausführungsbeispiele die Erfindung noch näher erläutert werden.

Es zeigt
- Figur 1: eine Längenmeßeinrichtung mit zwei transversal angeordneten Abtastbereichen;
- Figur 2: eine Längenmeßeinrichtung mit mehreren Codespuren;
- Figur 3: eine Längenmeßeinrichtung mit mehreren Codespuren und zusätzlicher Inkrementalspur;
- Figur 4: eine Längenmeßeinrichtung mit mehreren Codespuren und zwei zusätzlichen Inkrementalspuren und
- Figur 5: eine Codeteilung mit mehreren Inkrementalspuren.

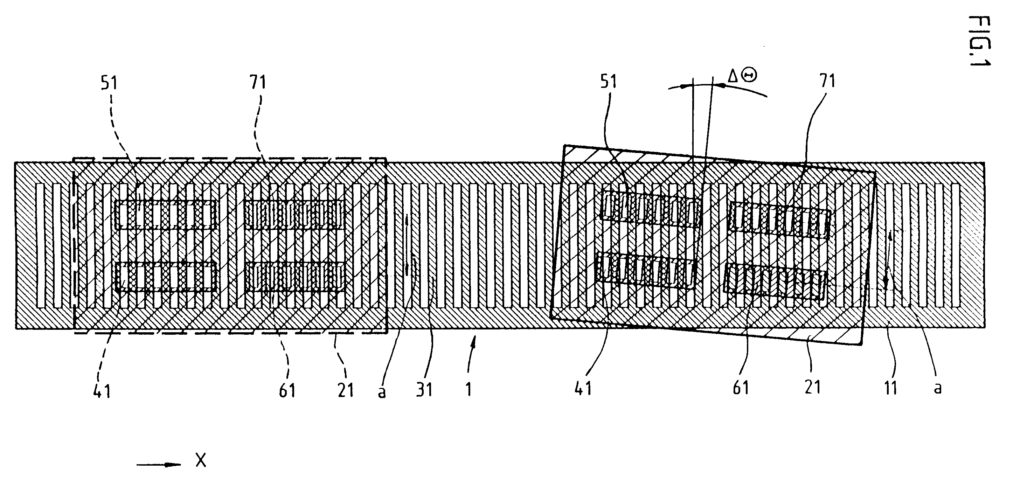

In Figur 1 ist eine Längenmeßeinrichtung 1 bzw. die hier relevanten Bestandteile nämlich eine Maßverkörperung 11 und eine Abtasteinrichtung 21 dargestellt. Die Maßverkörperung 11 weist eine Teilungsspur 31 auf, deren einzelne Gitterstriche in bekannter Weise quer zur Meßrichtung X verlaufen. Die Abtasteinrichtung 21 wird in nicht näher gezeigter Weise parallel zur Maßverkörperung 11 geführt. Die Abtasteinrichtung 21 weist Abtastfelder 41, 51, 61, 71 auf, die Teilungen aufweisen, die der Teilung der Teilungsspur 31 entsprechen und die in einem vorbestimmten Winkel Θ zu dieser ausgerichtet sind. Dieser Winkel Θ kann 0° sein, oder aber auch davon abweichen. Der einmal eingestellte Winkel Θ sollte im Idealfall über die gesamte Meßlänge konstant sein. Die Ideallage ist im linken Teil der Figur 1 gezeigt, die Abtasteinrichtung 21 ist mit gestrichelten Linien dargestellt.

Die Beibehaltung des konstanten Winkels Θ zwischen der Abtasteinrichtung 21 und der Maßverkörperung 11 ist direkt von der Qualität der Führung der Abtasteinrichtung 21 an der Maßverkörperung 11 abhängig. Sobald die Führung bzw. deren Geradheit nicht mehr ganz engen Toleranzen unterliegt, kann es zu Verkippungen zwischen der Maßverkörperung 11 und der Abtasteinrichtung 21 kommen, so daß sich der Winkel Θ um den Betrag ΔΘ verändert.

Diese Situation ist in übertriebener Darstellung in dem rechten Bereich der Figur 1 gezeigt. Durch die Verkippung der Abtasteinrichtung 21 um den Winkelbetrag ΔΘ gegenüber der Maßverkörperung 11 kommt es zu Meßfehlern, denn die Abtastfelder 41 und 61 tasten in Meßrichtung X betrachtet einen anderen Bereich der Teilungsspur 31 ab, als die Abtastfelder 51 und 71. Die je zwei Abtastfelder 41, 61 bzw. 51, 71, die in Meßrichtung X hintereinander liegen, dienen zur Erfassung der Verschieberichtung, was aus dem Stand der Technik hinlänglich bekannt ist.

Durch die Verschiebung der Abtasteinrichtung 21 entlang der Maßverkörperung 11 verändert sich der genannte Kippwinkel Θ ständig in Abhängigkeit von der Geradheit der Führung. Die im transversalen Abstand a angeordneten Abtastfelder 41, 61 bzw. 51, 71 ermöglichen eine Ermittlung der Winkeländerung ΔΘ und somit letztlich eine kippwinkelabhängige Korrektur des Meßwertes.

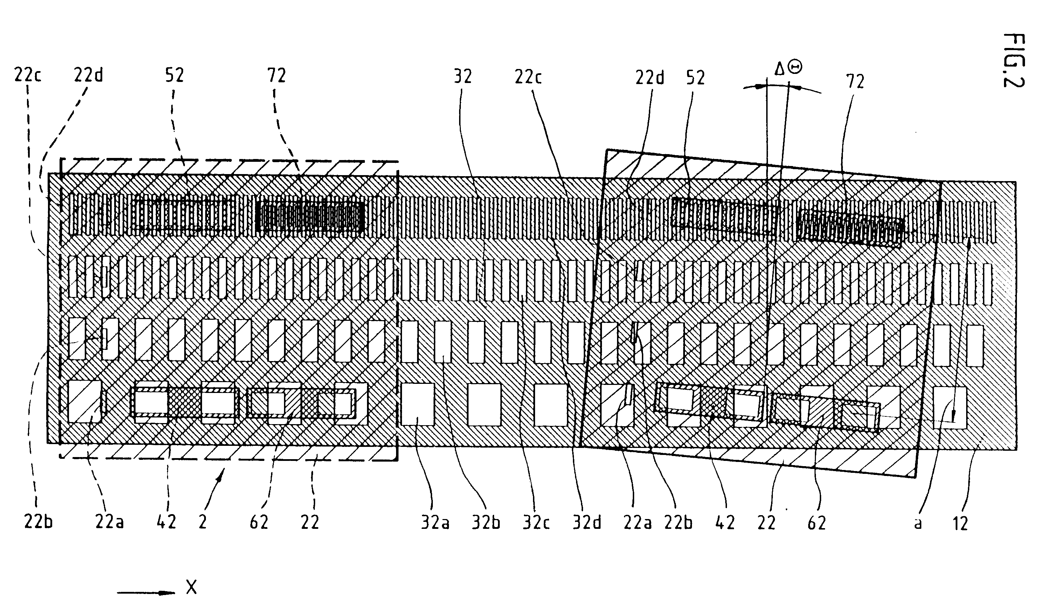

Besondere Bedeutung kommt der erfindungsgemäßen Ermittlung der Winkeländerung ΔΘ zu, wenn die Maßverkörperung eine Codeteilung mit mehreren Teilungsspuren aufweist. Derartige Ausführungsbeispiele sind in den Figuren 2 bis 5 dargestellt und sollen unter Bezug auf die vorangegangenen grundsätzlichen Erläuterungen nachstehend näher beschrieben werden.

Figur 2 zeigt eine Maßverkörperung 12 mit einer Teilung 32, die aus vier Teilungsspuren 32a, 32b, 32c und 32d gebildet wird. Diese Teilung 32 ist als Dual-Code aufgebaut. Selbstverständlich ist die Erfindung auch bei beliebigen anderen Codes mit Erfolg einsetzbar.

Die vier Teilungsspuren 32a, 32b, 32c, 32d der Teilung 32 werden von einer Abtasteinrichtung 22 abgetastet, die dazu vier Codeteilungs-Abtastfelder 22a, 22b, 22c, 22d aufweist, die in diesem Beispiel eine Ableselinie bilden, die genau senkrecht zur Meßrichtung verläuft (gestrichelte Darstellung im linken Figurenteil).

Es versteht sich, daß auch andere Abtastmethoden bei der Erfindung angewendet werden können, beispielsweise die hinlänglich bekannten U- und V-Abtastungen für Codemeßeinrichtungen. Bei dieser Gelegenheit soll auch darauf hingewiesen werden, daß das gewählte physikalische Abtastprinzip ebenfalls von untergeordneter Bedeutung ist. Es sind optische, magnetische, induktive oder auch kapazitive Abtastprinzipien einsetzbar.

Die von den Codeteilungs-Abtastfeldern 22a, 22b, 22c, 22d abgelesenen Signale werden in einer Auswerteschaltung zum codierten Positionswert zusammengefaßt.

Wenn, wie beim Beispiel gemäß Figur 1, die Abtasteinrichtung 22 durch Führungsfehler verkippt wird, ändert sich der Winkel Θ der Ableselinie. Dies hat zur Folge, daß die von den Codeteilungs-Abtastfeldern 22a, 22b, 22c, 22d gewonnenen Signale zu einer fehlerhaften Signalkombination führen, was in der Auswerteschaltung zu einem falschen Positionswert führt.

Erfindungsgemäß sind daher weitere Abtastfelder 42, 52, 62 und 72 vorgesehen, die Analogsignale aus den von ihnen abgetasteten Teilungsspuren 32a und 32d liefern. Aus den einzelnen Spuren 32a und 32d werden dabei Analogsignale gewonnen, die jeweils einer Abtastung einer Inkrementalspur mit entsprechender Gitterkonstante entsprechen. Pro Spur sind zwei Abtastfelder 42, 62 bzw. 52, 72 vorgesehen, um, wie bereits bekannt und auch in Figur 1 gezeigt, eine Erkennung der Bewegungsrichtung zu ermöglichen.

Im rechten Figurenteil ist wieder eine verkippte Abtasteinrichtung 22 gezeigt, bei der der Winkel Θ der Ableselinie um den Betrag ΔΘ verändert ist. Durch die Auswertung der von den Abtastfeldern 42, 52 bzw. 62, 72 erzeugten Analogsignale kann die Änderung des Winkels ΔΘ ermittelt werden. Wenn diese Winkeländerung ΔΘ bekannt ist, kann der falsche Positionswert korrigiert werden.

Je größer der Abstand a der Abtastfelder 42, 62 und 52, 72 ist, desto exakter läßt sich die Winkeländerungd ΔΘ bestimmen.

Bei dem gezeigten Beispiel sind zur Bestimmung der Winkeländerung ΔΘ jeweils die beiden äußeren Teilungsspuren 32a und 32d herangezogen. Ebenso ist die Auswertung anderer Teilungsspuren möglich. Die unterschiedlichen Teilungsperioden in den einzelnen Teilungsspuren sind bei der Auswertung zu berücksichtigen. Beispielsweise kann für die gröbste Teilungsspur 32a eine Interpolation durchgeführt werden, die - Fehlerfreiheit vorausgesetzt - zur gleichen Auflösung wie die der feinsten Teilungsspur 32d führt. Dieses Ausführungsbeispiel ist besonders vorteilhaft, weil außer der Codeteilung 32 keine weiteren Teilungsspuren erforderlich sind, um die Winkeländerung ΔΘ zu ermitteln und somit die Positionswertkorrektur durchführen zu können.

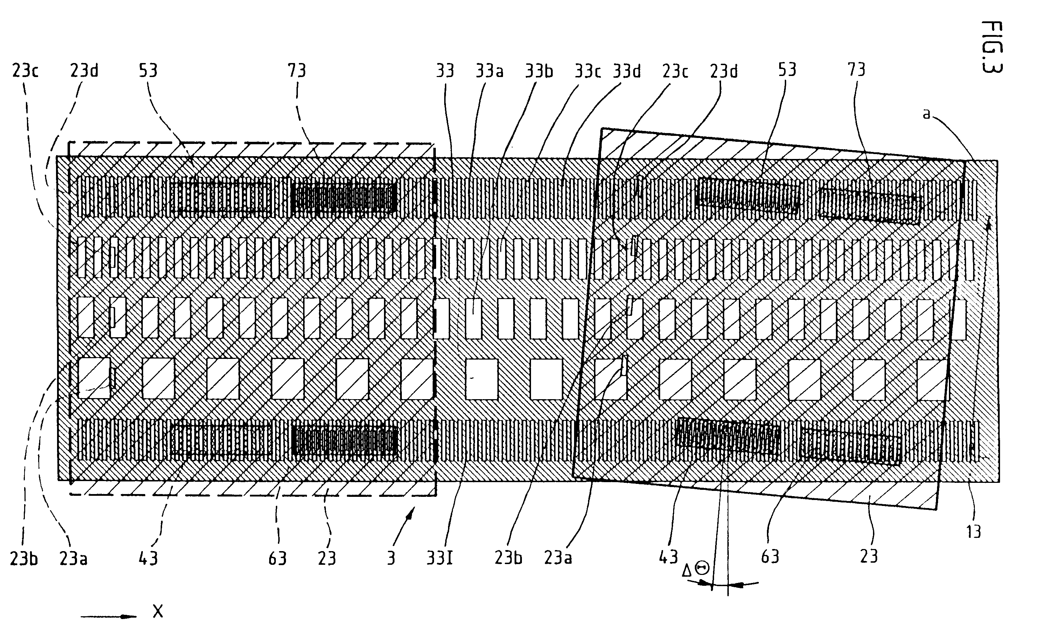

Wenn der Aufwand für eine elektronische Interpolation der gröbsten Spur nicht erwünscht ist, oder deren Fehlerfreiheit nicht gesichert ist, kann gemäß Figur 3 eine weitere Teilungsspur 33I vorgesehen sein, die als Inkremental-Teilung ausgebildet ist und die gleiche Auflösung hat, wie die feinste Teilungsspur 33d der Codeteilung 33.

Die Ermittlung der Winkeländerung ΔΘ erfolgt dann anhand der Abtastung der beiden äußeren Teilungsspuren 33d und 33I sinngemäß wie bei den vorausgegangenen Ausführungsbeispielen. Zur genaueren Ermittlung der Winkeländerung ΔΘ können die Signale der Teilungsspuren 33d und 33I noch elektronisch interpoliert werden.

Um substantielle Wiederholungen zu vermeiden, wird ausdrücklich auf die Analogie der Ausführungsbeispiele verwiesen. Diese drückt sich auch darin aus, daß gleichwirkende Elemente mit gleichen Bezugszeichen versehen sind, denen als Index die jeweilige Figurenbezifferung hinzugefügt worden ist.

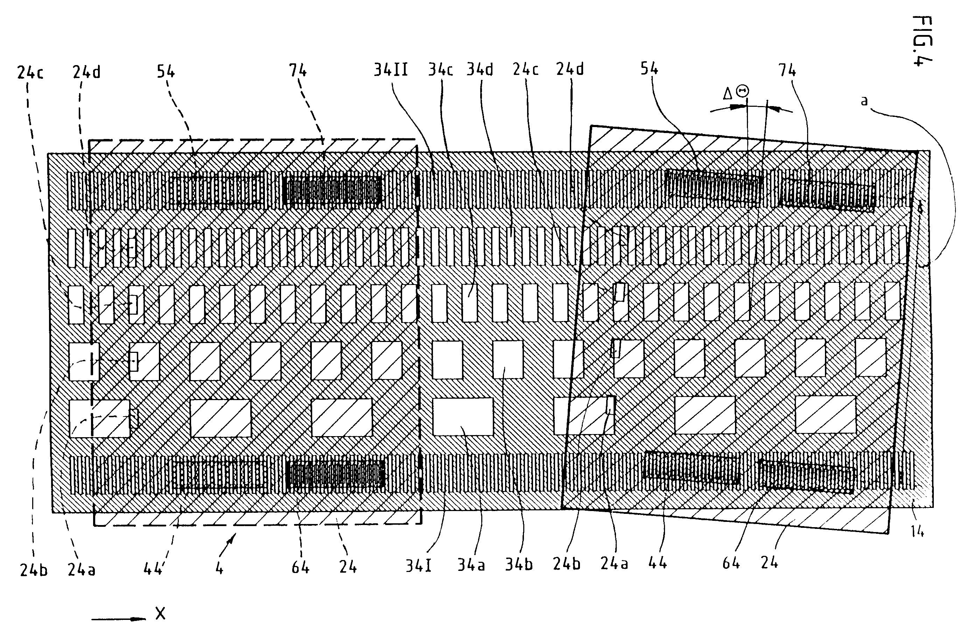

Eine weitere Variante ist in Figur 4 dargestellt. Dort sind neben der Codeteilung 34 noch zwei separate Inkremental-Teilungsspuren 34I und 34II vorgesehen, die bevorzugt die gleiche Teilungsperiode aufweisen. Die Ermittlung der Winkeländerung ΔΘ erfolgt sinngemäß wieder in der vorbeschriebenen Weise mit separaten Abtastfeldern 44, 54, 64 und 74, durch deren Abtastsignale die Winkeländerungen ΔΘ örtlich erfaßt werden und zur Korrektur der von den Codeteilungs-Abtastfeldern 24a, 24b, 24c, 24d abgelesenen Position dienen können.

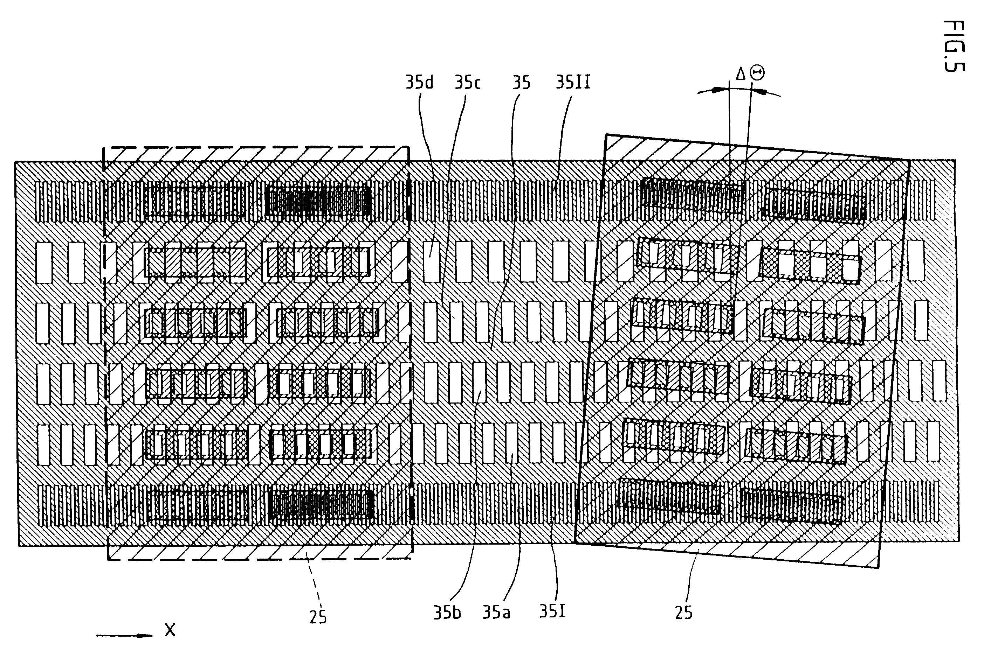

Bei Codemeßeinrichtungen, deren Codeteilung nicht aus einem zyklischen Code besteht, sondern aus einer Anzahl von Inkrementalspuren, deren Teilungsperioden geringfügig voneinander abweichen, läßt sich die Erfindung in besonders vorteilhafter Weise einsetzen. Eine derartige Codeteilung 35 mit den Teilungsspuren 35a, 35b, 35c und 35d ist schematisch in Figur 5 dargestellt. Ihnen liegen Inkrementalspuren 35I, 35II gleicher Teilungsperiode parallel. Die Spuren werden von einer Abtasteinrichtung 25 abgelesen.

Aus all dem ergibt sich, daß es bei der Erfindung unwesentlich ist, in welcher Phase der Messung die Korrektur erfolgt, sie kann während der Ablesung der Spuren, unmittelbar bei der Meßwertbildung oder auch anschließend vorgenommen werden. Entscheidend ist lediglich die korrekte Erfassung der Winkeländerung ΔΘ und deren Verrechnung mit dem Meßwert in irgendeinem Stadium der Messung.

## Patentansprüche

1. Wegmeßeinrichtung mit wenigstens einer Teilungsspur auf einer Maßverkörperung, die von einer in Meßrichtung relativ zur Maßverkörperung beweglichen Abtasteinrichtung abgelesen wird, und bei der die Führung der Abtasteinrichtung an der Maßverkörperung erfolgt, dadurch gekennzeichnet, daß in der Meßeinrichtung (1; 2; 3; 4) Mittel (41, 51, 61, 71; 42, 52, 62, 72; 43, 53, 63, 73; 44, 54, 64, 74) integriert sind, die während der Relativbewegung Winkeländerungen (ΔΘ) zwischen der Abtasteinrichtung (21; 22; 23; 24) und der Maßverkörperung (11; 12; 13; 14) ermitteln, und daß aus der ermittelten Winkeländerung (ΔΘ) ein Korrekturwert für den Meßwert gebildet werden kann.

2. Wegmeßeinrichtung nach Anspruch 1, dadurch gekennzeichnet, daß die Abtasteinrichtung (21; 22; 23; 24) senkrecht zur Meßrichtung (X) mehrere Abtastbereiche (41...74) aufweist.

3. Wegmeßeinrichtung nach Anspruch 2, dadurch gekennzeichnet, daß die Maßverkörperung (12; 13; 14; 15) mehrere in Meßrichtung (X) zueinander parallel verlaufende Teilungsspuren (32a...d; 33I, 33a...d; 34I, 34II, 34a...d; 35I, 35II, 35a...d) aufweist.

4. Wegmeßeinrichtung nach Anspruch 3, dadurch gekennzeichnet, daß die Teilungsspuren (32a...d; 33a...d; 34a...d; 35a...d) eine Codeteilung bilden.

5. Wegmeßeinrichtung nach Anspruch 4, dadurch gegekennzeichnet, daß zwei der Teilungsspuren (32a, 32d; 33I, 33d; 34I, 34II; 35I, 35 II) als Referenzspuren dienen, aus denen die Winkeländerung (ΔΘ) der Abtasteinrichtung (22; 23; 24; 25) durch Differenzbildung der abgelesenen Meßwerte ermittelt wird.

6. Wegmeßeinrichtung nach Anspruch 5, dadurch gekennzeichnet, daß die beiden äußeren Teilungsspuren (32a, 32d; 33I, 33d; 34I, 34II; 35I, 35II) als Referenzspuren dienen.

7. Wegmeßeinrichtung nach Anspruch 4, dadurch gekennzeichnet, daß beidseitig der Codeteilung (34; 35) je eine zusätzliche Inkrementalteilungsspur (34I, 34II; 35I, 35II) als Referenzspuren vorgesehen sind.

8. Wegmeßeinrichtung nach Anspruch 4, dadurch gekennzeichnet, daß die Spur (33d) mit der feinsten Codeteilung gleichzeitig eine der Referenzspuren bildet und eine weitere Inkrementalteilungsspur (33I) zusätzlich zur Codeteilungsspur (33a) mit der gröbsten Teilung als zweite Referenzspur vorgesehen ist.

9. Wegmeßeinrichtung nach Anspruch 4, dadurch gekennzeichnet, daß die Codeteilung (35) von einer Anzahl nichtzyklischer Inkrementalteilungsspuren (35a, 35b, 35c, 35d) gebildet wird, deren Teilungsperioden geringfügig voneinander abweichen.

## Claims

1. Distance measuring device with at least one graduation track on an embodiment of a measure, which is read by a scanning device movable in the direction of measurement relative to the embodiment of a measure, and in which guiding of the scanning device takes place on the embodiment of a measure, characterised in that means (41, 51, 61, 71; 42, 52, 62, 72; 43, 53, 63, 73; 44, 54, 64, 74) which during the relative movement determine variations in angle (ΔΘ) between the scanning device (21; 22; 23; 24) and the embodiment of a measure (11; 12, 13; 14) are integrated in the measuring device (1; 2; 3; 4), and in that a correction value for the measured value can be formed from the variation in angle (ΔΘ) which is determined.

2. Distance measuring device according to claim 1, characterised in that the scanning device (21; 22; 23; 24) comprises several scanning regions (41...74) perpendicularly to the direction of measurement (X).

3. Distance measuring device according to claim 2, characterised in that the embodiment of a measure (12; 13; 14; 15) comprises several graduation tracks (32a...d; 33I, 33a...d; 34I, 34II, 34a...d; 35I, 35II, 35a...d) extending parallel to each other in the direction of measurement (X).

4. Distance measuring device according to claim 3, characterised in that the graduation tracks (32a...d; 33a...d; 34a...d; 35a...d) form a coded graduation.

5. Distance measuring device according to claim 4, characterised in that two of the graduation tracks (32a, 32d; 33I, 33d, 34I, 34II; 35I, 35II) serve as reference tracks from which the variation in angle (ΔΘ) of the scanning device (22; 23; 24; 25) is determined by subtraction of the measured values which are read.

6. Distance measuring device according to claim 5, characterised in that the two outer graduation tracks (32a, 32d; 33I, 33d; 34I, 34II; 35I, 35II) serve as reference tracks.

7. Distance measuring device according to claim 4, characterized in that on either side of the coded graduation (34; 35) is provided an additional incremental graduation track (34I, 34II; 35I, 35II) as a reference track.

8. Distance measuring device according to claim 4, characterized in that the track (33d) with the finest coded graduation simultaneously forms one of the reference tracks, and a further incremental graduation track (33I) is provided in addition to the coded graduation track (33a) with the coarsest graduation as a second reference track.

9. Distance measuring device according to claim 4, characterized in that the coded graduation (35) is formed by a number of non-cyclic incremental graduation tracks (35a, 35b, 35c, 35d) of which the graduation periods differ from each other slightly.

## Revendications

1. Dispositif de mesure de déplacement comportant au moins une piste graduée disposée sur une matérialisation de la mesure, qui est lue par un dispositif de lecture mobile dans la direction de mesure par rapport à la matérialisation de la mesure et dans lequel le dispositif de mesure est guidé sur la matérialisation de la mesure, caractérisé par le fait que des moyens (41, 51, 61, 71: 42, 52, 62, 72; 43, 53, 63, 73; 44, 54, 64, 74) qui, au cours du déplacement relatif mesurent les variations angulaires (ΔΘ) entre le dispositif de lecture (21; 22; 23; 24) et la matérialisation de la mesure (11; 12; 13; 14) sont intégrés dans le dispositif de mesure (1; 2; 3; 4) et par le fait qu'une valeur de correction de la valeur mesurée peut être calculée à partir de la variation angulaire (ΔΘ) déterminée.

2. Dispositif de mesure de déplacement selon la revendication 1, caractérisé par le fait que le dispositif de lecture (21; 22; 23; 24) comporte plusieurs zones de lecture (41 ... 74) disposées perpendiculairement à la direction de mesure (X).

3. Dispositif de mesure de déplacement selon la revendication 2, caractérisé par le fait que la matérialisation de la mesure (11; 12; 13; 14) comporte plusieurs pistes graduées (32a ... d: 33I, 33a ... d; 34I, 34II, 34a ... d; 35I, 35II, 35a ... d) mutuellement parallèles qui s'étendent dans la direction de mesure (X).

4. Dispositif de mesure de déplacement selon la revendication 3, caractérisé par le fait que les pistes graduées (32a ... d; 33a ... d; 34a ... d; 35a ... d) forment une graduation de code.

5. Dispositif de mesure de déplacement selon la revendication 4, caractérisé par le fait que deux des pistes graduées (32a, 32d; 33I, 33d; 34I, 34II; 35I, 35II) servent de pistes de référence à partir desquelles on détermine la variation angulaire (ΔΘ) du dispositif de lecture (21; 22; 23; 24) par formation de la différence des valeurs de mesure lues.

6. Dispositif de mesure de déplacement selon la revendication 5, caractérisé par le fait que deux des pistes graduées (32a, 32d; 33I, 33d; 34I, 34II; 35I, 35II) extéricures servent de pistes de référence.

7. Dispositif de mesure de déplacement selon la revendication 4, caractérisé par le fait qu'il est prévu de part et d'autre de la graduation de code (34; 35) une piste graduée incrémentale (34I, 34II; 35I, 35II) supplémentaire comme pistes de référence.

8. Dispositif de mesure de déplacement selon la revendication 4, caractérisé par le fait que la piste (33d) avec la graduation de code la plus fine constitue simultanément l'une des pistes de référence et qu'il prévu comme deuxième piste de référence une piste graduée incrémentale (33I) supplémentaire en plus de la piste de code (33a) avec la graduation la plus grossière.

9. Dispositif de mesure de déplacement selon la revendication 4, caractérisé par le fait que la graduation de code (35) est constituée par un certain nombre de pistes graduées incrémentales (35a, 35b, 35c, 35d) non cycliques, dont les périodes de graduation différent faiblement les unes des autres.
